# EUROPÄISCHE PATENTANMELDUNG

(11) **EP 4 008 471 A1**
(43) Veröffentlichungstag der Anmeldung: **08.06.2022**
(21) Anmeldenummer: 20211334.6
(22) Anmeldetag: 02.12.2020
(51) Int. Cl.: B23K 9/12, B23K 9/173, B23K 37/00, B23K 9/095, B23K 9/32

(54) **VERFAHREN UND SCHWEISSVORRICHTUNG MIT DETEKTION VON ELEKTRISCHEN KONTAKTEN BEI EINEM SCHWEISSPROZESS**

(71) Anmelder: Fronius International GmbH, 4643 Pettenbach (AT)
(72) Erfinder: ARTELSMAIR, Josef, 4643 Pettenbach (AT); SÖLLINGER, Dominik, 4643 Pettenbach (AT); WALDHÖR, Andreas, 4643 Pettenbach (AT); BINDER, Manuel, 4643 Pettenbach (AT)
(74) Vertreter: SONN Patentanwälte OG

(57) **Zusammenfassung**

Die Erfindung betrifft ein Verfahren, bei dem mit einem Schweißbrenner (5), welcher vorzugsweise an einem Roboter angeordnet ist, ein Schweißprozess an einem Werkstück (3) durchführt wird sowie eine Schweißvorrichtung (1) zur Durchführung des Schweißverfahrens. Während des Schweißprozesses wird zumindest zeitweise eine elektrische Spannung (U _{D} ) an ein außenliegendes Element (17) des Schweißbrenners (5), insbesondere an eine Außenwand (9') einer Gasdüse (9), angelegt und mit der angelegten elektrischen Spannung (U _{D} ) ein allenfalls auftretender elektrischer Kontakt (13, 14) zwischen dem außenliegenden Element (17) und einem weiteren Element (24', 24"), insbesondere dem Werkstück (3) oder einem Kontaktrohr (16), detektiert wird.

## Beschreibung

Die Erfindung betrifft ein Verfahren, bei dem mit einem Schweißbrenner, welcher vorzugsweise an einem Roboter angeordnet ist, ein Schweißprozess an einem Werkstück durchführt wird.

Des Weiteren betrifft die Erfindung eine Schweißvorrichtung zur Durchführung eines solchen Verfahrens.

Während der Durchführung von Schweißprozessen können im Fehlerfall unerwünschte physische bzw. elektrische Kontakte zwischen dem Schweißbrenner und dem zu schweißenden Werkstück oder zwischen Teilen des Schweißbrenners auftreten. Derartige Kontakte können den Schweißprozess stören und folglich negative Auswirkungen auf die Qualität der Schweißnaht haben. Aus diesem Grund sollen im Fehlerfall auftretende Kontakte während des Schweißprozesses sofort erkannt und rasch entsprechende Gegenmaßnahmen getroffen werden, um Schäden am Werkstück oder am Schweißbrenner zu verhindern und eine hohe Schweißqualität sicherstellen zu können.

Ein Beispiel für einen physischen Kontakt, der während des Schweißprozesses auftreten kann, ist eine unerwünschte Berührung des Schweißbrenners mit dem Werkstück. Ein solcher Kontakt kann zum Beispiel auftreten, wenn bei einem automatisiert ablaufenden Schweißprozess die Schweißbahn falsch geplant oder das Werkstück falsch platziert wurde. Wenn eine Berührung zwischen dem Schweißbrenner und Werkstück stattfindet, können Schäden am Werkstück oder am Schweißbrenner entstehen. Um gröbere Schäden zu vermeiden, werden bei robotergestützten Schweißprozessen sogenannte Kollisionsboxen eingesetzt, die einen Schweißprozess unterbrechen bzw. einen Roboter zum Stillstand bringen, sobald eine auf den Schweißbrenner einwirkende Kraft, die bei einer Berührung des Schweißbrenners mit dem Werkstück entsteht, einen bestimmten Schwellenwert übersteigt. Eine Kollisionsbox ist beispielsweise aus der US 2018/0029238 A1 bekannt. Durch das Stoppen des Schweißprozesses kommt es jedoch zu Verzögerungen im Produktionsprozess. Zudem wird bei einer Unterbrechung des Schweißprozesses die Schweißnaht nicht durchgehend geschweißt, was die Qualität der Schweißnaht mindern kann. Darüber hinaus können bereits in der Zeit zwischen dem Erstkontakt und dem Erreichen des notwendigen Schwellenwertes zum Auslösen der Kollisionsbox Schäden am Werkstück oder am Schweißbrenner verursacht oder die Schweißnaht beeinträchtigt werden.

Ein Beispiel für einen unerwünschten elektrischen Kontakt, der während des Schweißprozesses am Schweißbrenner auftreten kann, ist das Entstehen von elektrischen Verbindungen zwischen verschiedenen, teils spannungsführenden Teilen des Schweißbrenners durch metallische Spritzer eines abschmelzenden Schweißdrahtes. Beispielsweise kann der Fall eintreten, dass ein unter normalen Umständen nicht spannungsführender Teil des Schweißbrenners, beispielsweise eine Gasdüse, durch Schweißspritzer mit dem Schweißspannungspotential der Schweißstromquelle elektrisch verbunden wird, wodurch der Lichtbogen von seiner vorgesehenen Position abgelenkt werden oder der Schweißbrenner einen Schaden nehmen kann.

Zusammenfassend stellen ungeplant auftretende physische und elektrische Kontakte während des Schweißprozesses Fehler dar, die nachteilige Auswirkungen auf den Schweißprozess, das Werkstück und den Schweißbrenner haben können. Es ist daher wünschenswert, derartige Fehler zum Zeitpunkt ihres Auftretens sofort erkennen und beseitigen zu können.

Aus dem Stand der Technik ist bekannt, vor Beginn eines Schweißprozesses die Position eines Werkstücks durch Berührung des Schweißdrahtes (sogenanntes "Wire Sensing") oder mittels Laser-Sensoren zu detektieren. Dies wird beispielsweise in der US 2019/0270157 A1 gezeigt.

Im Lichte dieser Ausführungen ist es Aufgabe der vorliegenden Erfindung, die Nachteile des Standes der Technik zu lindern oder gar gänzlich zu beseitigen. Insbesondere ist es Aufgabe der vorliegenden Erfindung, ein Verfahren und eine Schweißvorrichtung der eingangs erwähnten Art zur Verfügung zu stellen, die es ermöglichen, unerwünscht oder ungeplant auftretende Kontakte zwischen Teilen des Schweißbrenners oder dem Schweißbrenner und dem Werkstück möglichst rasch während eines Schweißprozesses zu detektieren, um einen durchgängigen Schweißprozess und eine optimale Schweißqualität zu erzielen.

Gelöst wird diese Aufgabe durch ein Verfahren nach Anspruch 1 und durch eine Schweißvorrichtung nach Anspruch 11.

Erfindungsgemäß ist bei einem Verfahren der oben genannten Art vorgesehen, dass während des Schweißprozesses zumindest zeitweise eine elektrische Spannung an ein außenliegendes Element des Schweißbrenners, insbesondere an eine Außenwand einer Gasdüse, angelegt wird und mit der angelegten elektrischen Spannung ein allenfalls auftretender elektrischer Kontakt zwischen dem außenliegenden Element und einem weiteren Element, insbesondere dem Werkstück oder einem Kontaktrohr, detektiert wird. Durch das Anlegen einer elektrischen Spannung an das außenliegende Element des Schweißbrenners während des Schweißprozesses können auftretende Kontakte zwischen dem außenliegenden Element und einem weiteren Element auf Grund von Änderungen der angelegten elektrischen Spannung und/oder eines sich einstellenden elektrischen Stromes vorteilhafterweise bereits zum Zeitpunkt des Auftretens detektiert werden. In weiterer Folge können, wie weiter unten näher beschrieben wird, rasch entsprechende Gegenmaßnahmen vorgenommen werden. Schäden am Schweißbrenner oder am Werkstück während des Schweißprozesses können somit vorteilhafterweise vermieden werden. Ein Überschreiten eines Schwellwerts einer sich aufbauenden Kraft bei einer Berührung des Werkstücks durch den Schweißbrenner, wie es bei einer Kollisionsbox notwendig ist, ist bei dem erfindungsgemäßen Verfahren nicht mehr notwendig. Vorteilhaft ist, dass allenfalls auftretende Kontakte während des Schweißprozesses detektiert werden können. Mit anderen Worten können auftretende Kontakte während der Herstellung der Schweißnaht am Werkstück rasch bzw. in Echtzeit detektiert werden. Durch Anlegen der elektrischen Spannung an das außenliegende Element des Schweißbrenners entsteht bei einem physischen Kontakt zwischen dem außenliegenden Element und dem weiteren Element, beispielsweise dem Werkstück, auch ein detektierbarer elektrischer Kontakt, wobei sich ein elektrischer Stromfluss einstellt. Ein physischer Kontakt des Schweißbrenners geht somit durch Anlegen der Spannung mit einem elektrischen Kontakt einher und kann daher mit dem erfindungsgemäßen Verfahren detektiert werden. Zweckmäßigerweise können zur Detektion eines auftretenden Kontakts die an das außenliegende Element angelegte elektrische Spannung, eine hierfür repräsentative elektrische Größe und/oder ein sich bei einem elektrischen Kontakt einstellender elektrischer Strom mit Hilfe einer Spannungs- und/oder Strommesseinrichtung gemessen und ausgewertet werden. Bei den auftretenden und zu detektierenden elektrischen Kontakten zwischen dem außenliegenden Element und dem weiteren Element kann es sich beispielsweise um durch Berührungen entstehende elektrische Kontakte zwischen dem außenliegenden Element und einem vorzugsweise geerdeten Werkstück oder durch Schweißspritzer entstehende elektrische Kontakte zwischen dem außenliegenden Element und einer anderen Komponente des Schweißbrenners, beispielsweise einem Kontaktrohr, handeln. Das weitere Element kann zum Beispiel ein Werkstück oder ein Teil des Schweißbrenners, wie zum Beispiel ein Kontaktrohr, sein. Das weitere Element kann mit einem Pol der Schweißvorrichtung, beispielsweise der Masse, verbunden sein, insbesondere, wenn es sich um ein Werkstück handelt. Die angelegte elektrische Spannung kann, muss aber nicht, über die gesamte Dauer des Schweißprozesses am außenliegenden Element anliegen. Vorzugsweise liegt die Potentialdifferenz zwischen elektrischer Erde bzw. Masse und der an das außenliegende Element angelegten Spannung in einem Bereich zwischen 5 V und 350 V, insbesondere zwischen 15 V und 300 V. Bei der angelegten elektrischen Spannung kann es sich um eine Schweißspannung einer Schweißstromquelle oder um eine dazu proportionale Spannung, insbesondere eine abwärtsgewandelte Schweißspannung, handeln. Die Schweißspannung kann beispielsweise mittels eines Spannungsteilers abwärtsgewandelt werden. Die Schweißspannung kann direkt oder indirekt, vorzugsweise über Widerstandselemente bzw. Kondensatoren, an das außenliegende Element gelegt werden. Nach Detektion eines elektrischen Kontakts zwischen dem außenliegenden Element und dem weiteren Element können zur Beseitigung des Kontakts entsprechende Gegenmaßnahmen getroffen werden, wie etwa die Reinigung des Schweißbrenners von Schweißspritzern, die Neuausrichtung des Schweißbrenners oder die Neuausrichtung des Werkstücks. Durch die mit dem erfindungsgemäßen Verfahren mögliche frühe Erkennung von elektrischen und physischen Kontakten der eingangs erwähnten Art können Gegenmaßnahmen noch während des Schweißprozesses vorgenommen werden. Beispielsweise kann bei einem robotergestützten Schweißverfahren nach Detektion eines elektrischen Kontakts zwischen dem außenliegenden Element und einem Werkstück noch während des Schweißprozesses eine Bahnkorrektur durchgeführt werden. Vorzugsweise handelt es sich bei dem außenliegenden Element, an welches die elektrische Spannung angelegt wird, um eine Gasdüse des Schweißbrenners oder um eine Außenwand der Gasdüse. Denkbar wäre aber auch, dass das außenliegende Element durch einen Ring, einen Draht oder ein ähnliches Element gebildet wird. Die Gasdüse des Schweißbrenners umgibt vorzugsweise ein strom- und spannungsführendes Kontaktrohr und kann den äußersten Teil des Schweißbrenners bilden. Innerhalb der Gasdüse strömt während des Schweißprozesses ein Schutzgas, beispielsweise Argon oder Helium, das an einem unteren Ende der Gasdüse durch eine Öffnung in die Umgebung austritt und den Lichtbogen und die erzeugte Schweißnaht vor dem Sauerstoff der Umgebungsluft schützt. Der Schweißdraht wird vorzugsweise ebenfalls innerhalb der Gasdüse an die Schweißstelle geführt. Das Kontaktrohr ist dazu eingerichtet, den Schweißdraht mit dem gewünschten Schweißstrom zu versorgen. Bei einem robotergestützten Schweißverfahren kann weiterhin ergänzend eine mechanische Kollisionsbox vorgesehen sein. Diese wird jedoch bei Verwendung des erfindungsgemäßen Verfahrens und der Anwendung von Gegenmaßnahmen bei Detektion von elektrischen Kontakten nicht mehr oder nur mehr in Ausnahmefällen ausgelöst, da mit dem erfindungsgemäßen Verfahren Berührungen des Schweißbrenners mit einem Werkstück schneller erkannt werden können. Insbesondere ist es bei dem erfindungsgemäßen Verfahren wie oben beschrieben nicht notwendig, dass auf den Schweißbrenner eine über einen bestimmten Schwellenwert liegende Kraft einwirkt, um den Schweißprozess mit Hilfe der Kollisionsbox zu unterbrechen.

Bei einer Weiterbildung der Erfindung ist vorgesehen, dass bei einem detektierten elektrischen Kontakt, insbesondere einer Berührung des außenliegenden Elements mit dem Werkstück, ein Warnsignal ausgegeben, der Schweißprozess unterbrochen, eine Schweißbahn vorzugsweise ohne Unterbrechung des Schweißprozesses korrigiert und/oder das Werkstück neu platziert wird. Beispielsweise kann bei einem detektierten elektrischen Kontakt zwischen dem außenliegenden Element und dem Kontaktrohr durch Schweißspritzer der Schweißprozess unterbrochen und ein Warnsignal ausgegeben werden. Wenn andererseits ein elektrischer Kontakt zwischen dem außenliegenden Element und dem Werkstück detektiert wird, kann wiederum vorgesehen sein, dass - ohne den Schweißprozess zu unterbrechen - eine Bahnkorrektur während des Schweißprozesses durchgeführt wird, sodass die Gasdüse das Werkstück in weiterer Folge nicht mehr berührt.

Um an das außenliegende Element des Schweißbrenners eine elektrische Spannung anzulegen, kann gemäß einer Ausführungsform der Erfindung vorgesehen sein, dass das außenliegende Element des Schweißbrenners elektrisch mit einer Schweißstromquelle zur Bereitstellung einer Schweißspannung verbunden ist. Das außenliegende Element kann direkt oder indirekt, beispielsweise über ein ohmsches Widerstandselement oder eine Kapazität, mit der Schweißstromquelle verbunden sein. Im Normalzustand, also ohne auftretenden Kontakt, beträgt die Potentialdifferenz zwischen der Erdung und dem außenliegenden Element vorzugsweise zwischen 5 V und 350 V, insbesondere zwischen 15 V und 300 V. Die Schweißspannung kann sich während des Schweißvorgangs dynamisch ändern. Es kann auch vorgesehen sein, dass die Spannung an dem außenliegenden Element an Stelle der Schweißstromquelle durch eine Hilfsspannungsquelle zur Verfügung gestellt wird. Dies kann vorteilhaft sein, um elektrische Kontakte vor oder nach dem Schweißprozess ohne Zuhilfenahme der Schweißspannung zu detektieren.

In einer bevorzugten Ausführungsform ist die Schweißstromquelle über zumindest einen ersten Widerstand mit dem außenliegenden Element des Schweißbrenners elektrisch verbunden. Der erste Widerstand kann als ohmsches Widerstandselement ausgebildet sein. Bevorzugt ist, wenn der zumindest eine erste Widerstand einen Wert von zumindest 10 kΩ aufweist. Vorzugsweise sind mehrere in Serie geschaltete erste Widerstände zwischen der Schweißstromquelle und dem außenliegenden Element angeordnet. Die Widerstandswerte der einzelnen Widerstände können dann kleiner sein. Der Serienwiderstand der ersten Widerstände liegt wiederum bevorzugt bei zumindest 10 kΩ. Es können aber auch mehrere parallel geschaltete erste Widerstände zwischen der Schweißstromquelle und dem außenliegenden Element angeordnet sein. Die Widerstandswerte der einzelnen Widerstände können dann größer sein. Der Parallelwiderstand der ersten Widerstände liegt wiederum bevorzugt bei zumindest 10 kΩ. Durch den zumindest einen ersten Widerstand wird der sich einstellende elektrische Strom bei einem auftretenden elektrischen Kontakt begrenzt. Darüber hinaus kann zur Detektion eines auftretenden elektrischen Kontakts die Spannung an dem zumindest einen ersten Widerstand oder der Strom durch den zumindest einen ersten Widerstand gemessen werden. Wenn mehrere erste Widerstände vorgesehen sind, kann die Spannung an sämtlichen ersten Widerständen, an mehreren ersten Widerständen oder an nur einem ersten Widerstand gemessen werden. Parallel zu dem zumindest einen ersten Widerstand kann gemäß einer Ausführungsform ein Kondensator vorgesehen sein.

Bei einer Weiterbildung der Erfindung ist vorgesehen, dass das außenliegende Element des Schweißbrenners über zumindest einen zweiten Widerstand mit dem elektrischen Potential des Werkstücks, welches vorzugsweise geerdet ist, verbunden ist. Auch der zweite Widerstand kann als ohmsches Widerstandselement ausgebildet sein. Bevorzugt ist, wenn der zumindest eine zweite Widerstand einen Wert von zumindest 10 kΩ aufweist. Vorzugsweise sind mehrere in Serie geschaltete zweite Widerstände zwischen dem außenliegenden Element und dem Werkstück angeordnet. Die Widerstandswerte der einzelnen Widerstände können dann kleiner sein. Der Serienwiderstand der zweiten Widerstände liegt wiederum bevorzugt bei zumindest 10 kΩ. Es können aber auch mehrere parallel geschaltete zweite Widerstände zwischen dem außenliegenden Element und dem Werkstück angeordnet sein. Die Widerstandswerte der einzelnen Widerstände können dann größer sein. Der Parallelwiderstand der zweiten Widerstände liegt wiederum bevorzugt bei zumindest 10 kΩ. Zur Detektion eines auftretenden elektrischen Kontakts kann die Spannung an dem zumindest einen zweiten Widerstand oder der Strom durch den zumindest einen zweiten Widerstand gemessen werden. Wenn mehrere zweite Widerstände vorgesehen sind, kann die Spannung an sämtlichen zweiten Widerständen, an mehreren zweiten Widerständen oder an nur einem zweiten Widerstand gemessen werden. Parallel zu dem zumindest einen zweiten Widerstand kann gemäß einer Ausführungsform ein Kondensator vorgesehen sein. Wenn sowohl zumindest ein erster Widerstand als auch zumindest ein zweiter Widerstand vorgesehen sind, liegt ein elektrischer Spannungsteiler zwischen dem Potential des Werkstücks und dem Potential der Schweißstromquelle vor. Ein oberer Zweig des Spannungsteilers wird durch den zumindest einen ersten Widerstand und ein unterer Zweig des Spannungsteilers wird durch den zumindest einen zweiten Widerstand gebildet. Das außenliegende Element des Schweißbrenners ist dabei mit einem Abgriffspunkt zwischen dem oberen und dem unteren Zweig des Spannungsteilers elektrisch verbunden. Durch Spannungs- und/oder Strommessungen am Spannungsteiler, beispielsweise im oberen und/oder unteren Zweig, können Spannungsänderungen ("Spannungsverschiebungen") bzw. Stromflussänderungen im Spannungsteiler festgestellt werden, sodass mehrere Arten von elektrischen Kontakten auf einfache Weise detektiert und voneinander unterschieden werden können. Mit anderen Worten wird bei dieser Ausführungsform auf Basis von Änderungen einer elektrischen Größe im Spannungsteiler ein allenfalls auftretender Kontakt detektiert. Auf Basis der Änderungen der elektrischen Größe kann auch auf die Art des Kontakts geschlossen werden. Bei einer Spannungsmessung muss nicht die Spannung eines ganzen Zweiges des Spannungsteilers gemessen werden, sondern es kann auch nur eine Teilspannung eines Zweiges gemessen werden. Beispielsweise kann vorgesehen sein, nur die Spannung über einen ersten oder einen zweiten Widerstand zu messen. Die Variante mit dem Spannungsteiler bestehend aus Widerständen besitzt den Vorteil, dass auch elektrische Kontakte zwischen dem Kontaktrohr und dem außenliegenden Element, insbesondere der Gasdüse, sowie dem Kontaktrohr und dem Werkstück zuverlässig erkannt werden können.

In einer bevorzugten Ausführungsform ist vorgesehen, dass ein allenfalls auftretender elektrischer Kontakt des außenliegenden Elements mit dem weiteren Element auf Basis einer Änderung einer gemessenen Spannung, welche über den zumindest einen ersten und/oder zumindest einen zweiten Widerstand abfällt, und/oder eines gemessenen Stromes, der durch den zumindest einen ersten und/oder zumindest einen zweiten Widerstand fließt, detektiert wird. Wenn beispielsweise das außenliegende Element das Werkstück berührt und daher ein elektrischer Kontakt zwischen Werkstück und dem außenliegenden Element auftritt, wird der zumindest eine zweite Widerstand kurzgeschlossen, sodass im Wesentlichen die gesamte von der Schweißstromquelle oder der Hilfsspannungsquelle zur Verfügung gestellte Spannung am zumindest einen ersten Widerstand abfällt. Im Falle eines elektrischen Kontakts des Kontaktrohres mit dem außenliegenden Element des Schweißbrenners wird der zumindest eine erste Widerstand kurzgeschlossen, sodass im Wesentlichen die gesamte von der Schweißstromquelle oder der Hilfsspannungsquelle zur Verfügung gestellte Spannung am zumindest einen zweiten Widerstand abfällt. Diese Änderungen können mit Spannungs- und/oder Strommessungen detektiert werden. In weiterer Folge kann auf die Art des auftretenden Fehlers bzw. Kontakts rückgeschlossen werden.

Vorzugsweise werden auf Basis der Änderung der gemessenen Spannung und/oder des gemessenen Stromes zumindest zwei unterschiedliche Arten von möglichen elektrischen Kontakten unterschieden werden, nämlich zumindest ein elektrischer Kontakt zwischen dem außenliegenden Element und einem ersten weiteren Element, insbesondere dem Werkstück, und ein elektrischer Kontakt zwischen dem außenliegenden Element und einem zweiten weiteren Element, insbesondere einem Kontaktrohr des Schweißbrenners. Dies kann beispielsweise auf Basis der oben beschriebenen Spannungsverschiebungen bzw. Stromflussänderungen im Spannungsteiler erfolgen.

Bei einer Ausführungsform ist vorgesehen, dass parallel zu dem zumindest einen ersten Widerstand zumindest ein erster Kondensator und parallel zu dem zumindest einen zweiten Widerstand zumindest ein zweiter Kondensator angeordnet ist. Bei dieser Variante der Erfindung kann ein Strom durch den ersten Kondensator und/oder ein Strom durch den zweiten Kondensator gemessen werden. Bei dem Strom kann es sich beispielsweise um einen Wechsel- bzw. Rippelstrom handeln. Ein Verbindungspunkt zwischen dem zumindest einen ersten und dem zumindest einen zweiten Kondensator kann mit dem Abgriffspunkt des oben näher beschriebenen Spannungsteilers verbunden sein.

Bei einer Weiterbildung ist vorgesehen, dass ein allenfalls auftretender elektrischer Kontakt des außenliegenden Elements mit dem weiteren Element auf Basis einer Änderung eines gemessenen Stromes, welcher durch den zumindest einen ersten und/oder den zumindest einen zweiten Kondensator fließt, detektiert wird. Auch hierbei können zumindest zwei unterschiedliche Arten von möglichen elektrischen Kontakten unterschieden werden, nämlich zumindest ein elektrischer Kontakt zwischen dem außenliegenden Element und einem ersten weiteren Element, insbesondere dem Werkstück, und ein elektrischer Kontakt zwischen dem außenliegenden Element und einem zweiten weiteren Element, insbesondere einem Kontaktrohr des Schweißbrenners.

Um mehrere Arten von elektrischen Kontakten leichter voneinander unterscheiden zu können, kann es günstig sein, wenn eine Änderung der Schweißspannung der Schweißstromquelle bei der Detektion eines allenfalls auftretenden elektrischen Kontakts herangezogen wird. Zu diesem Zweck kann die Schweißspannung der Schweißstromquelle mit Hilfe einer Spannungsmesseinrichtung gemessen werden.

In einer Ausführungsform ist vorgesehen, dass auf Basis einer Änderung der Schweißspannung der Schweißstromquelle oder der oben beschriebenen Hilfsspannung der Hilfsspannungsversorgung ein allenfalls auftretender elektrischer Kontakt zwischen einem Kontaktrohr oder einem Schweißdraht des Schweißbrenners und dem Werkstück vor und/oder nach dem Schweißprozess detektiert wird. Ein solcher elektrischer Kontakt ist meist mit einem Einbruch der Schweißspannung oder der Hilfsspannung verbunden. Vor oder nach einem Schweißprozess kann auf diese Weise die Lage des Werkstücks detektiert werden. Die Höhe der Schweißspannung kann dabei zu diesem Zweck im Vergleich zur Höhe der benötigten Schweißspannung beim Schweißprozess reduziert werden. Auch der auftretende elektrische Strom kann bei einem elektrischen Kontakt begrenzt werden.

Um die Position des Werkstücks zu überprüfen oder zu detektieren, kann das außenliegende Elemente des Schweißbrenners vor oder nach dem Schweißprozess zur Feststellung der Position des Werkstücks mit dem Werkstück in Berührung gebracht werden. In diesem Fall wird demnach das außenliegende Element bewusst mit dem Werkstück in Berührung gebracht. Dies kann beispielweise durch Positionierung des Schweißbrenners mit einem Roboter erfolgen. Sobald ein elektrischer Kontakt durch die angelegte Spannung am außenliegenden Element festgestellt wird, kann der Schweißbrenner gestoppt oder wieder in die entgegengesetzte Richtung verfahren werden. Die Position der Berührung mit dem Werkstück und damit die Position des Werkstücks kann zum Beispiel aus der Stellung des Roboters ermittelt werden. Vorzugsweise wird bei dieser Ausführungsform die an das außenliegende Element gelegte Spannung durch eine Hilfsspannungsquelle zur Verfügung gestellt.

Die oben erwähnte Aufgabe wird auch durch eine Schweißvorrichtung, insbesondere eine Schutzgasschweißvorrichtung, nach Anspruch 11 gelöst. Die Schweißvorrichtung ist zur Durchführung eines Schweißprozesses an einem Werkstück mit einem Schweißbrenner eingerichtet. Der Schweißbrenner ist vorzugsweise an einem Roboter angeordnet, sodass der Schweißprozess automatisiert ablaufen kann. Der Roboter kann dann als Teil der Schweißvorrichtung gesehen werden. Erfindungsgemäß ist vorgesehen, dass eine elektrische Spannung an einem außenliegenden Element des Schweißbrenners, insbesondere an einer Außenwand einer Gasdüse, anliegt und eine Detektionseinheit vorgesehen und dazu eingerichtet ist, mit der angelegten Spannung während des Schweißprozesses einen allfällig auftretenden elektrischen Kontakt zwischen dem außenliegenden Element und einem weiteren Element, insbesondere dem Werkstück oder einem Kontaktrohr des Schweißbrenners, zu detektieren. Die Schweißvorrichtung ist daher dazu in der Lage, das oben beschriebene Verfahren auszuführen. Hinsichtlich weiterer Merkmale und der Vorteile in Bezug auf die Schweißvorrichtung wird daher auf die obigen Ausführungen zum erfindungsgemäßen Verfahren verwiesen.

In einer Ausführungsform der Erfindung ist vorgesehen, dass zum Anlegen der elektrischen Spannung eine Schweißstromquelle zur Bereitstellung einer Schweißspannung mit dem außenliegenden Element des Schweißbrenners verbunden ist.

Um den bei einem elektrischen Kontakt auftretenden Stromfluss zu begrenzen, ist bei einer Weiterbildung der Erfindung, wie oben näher erläutert, vorgesehen, dass die Schweißstromquelle über zumindest einen ersten Widerstand mit dem außenliegenden Element des Schweißbrenners verbunden ist. Der erste Widerstand kann als ohmsches Widerstandselement ausgebildet sein. Bevorzugt ist, wenn der zumindest eine erste Widerstand einen Wert von zumindest 10 kΩ aufweist. In einer Ausführungsform können mehrere in Serie geschaltete erste Widerstände zwischen der Schweißstromquelle und dem außenliegenden Element angeordnet sein. Zur Detektion von elektrischen Kontakten zwischen dem außenliegenden Element und einem weiteren Element kann die Spannung an dem zumindest einem ersten Widerstand oder der Strom durch den zumindest einen ersten Widerstand mit Hilfe von Strom- und/oder Spannungsmesssensoren gemessen werden. Wenn mehrere erste Widerstände vorgesehen sind, kann die Spannung an sämtlichen ersten Widerständen, an mehreren ersten Widerständen oder an nur einem ersten Widerstand gemessen werden.

Weiters kann vorgesehen sein, dass das außenliegende Element des Schweißbrenners über zumindest einen zweiten Widerstand mit dem Potential des Werkstücks verbunden ist. Auch der zweite Widerstand kann als ohmsches Widerstandselement ausgebildet sein. Bevorzugt ist, wenn der zumindest eine zweite Widerstand einen Wert von zumindest 10 kΩ aufweist. Vorzugsweise sind mehrere in Serie geschaltete zweite Widerstände zwischen dem außenliegenden Element und dem Werkstück angeordnet. Wenn sowohl zumindest ein erster Widerstand als auch zumindest ein zweiter Widerstand vorgesehen sind, liegt ein Spannungsteiler zwischen dem Potential des Werkstücks und dem Potential der Schweißstromquelle oder der Hilfsspannungsquelle vor, in dessen Abgriffspunkt das außenliegende Element des Schweißbrenners elektrisch angeschlossen ist. Durch Spannungs- und/oder Strommessungen am Spannungsteiler können Spannungsänderungen ("Spannungsverschiebungen") im Spannungsteiler festgestellt werden, sodass mehrere Arten von elektrischen Kontakten auf einfache Weise identifiziert und voneinander unterscheiden werden können.

Die Detektionseinheit ist bei einer Ausführungsform dazu eingerichtet, eine Spannung und/oder einen Strom an dem/durch den zumindest einen ersten Widerstand und/oder zumindest einen zweiten Widerstand zu messen.

Bei einer weiteren Ausführungsform ist parallel zu dem zumindest einen ersten Widerstand ein erster Kondensator und parallel zu dem zumindest einen zweiten Widerstand ein zweiter Kondensator angeordnet. Die Detektionseinheit kann dazu eingerichtet sein, den Strom durch den zumindest einen ersten Kondensator und/oder den Strom durch den zumindest einen zweiten Kondensator zu messen. Ein Verbindungspunkt zwischen dem zumindest einen ersten und dem zumindest einen zweiten Kondensator kann mit dem Abgriffspunkt des oben näher beschriebenen Spannungsteilers verbunden sein.

Die Erfindung wird im Folgenden an Hand von Figuren näher erläutert, auf die sie allerdings nicht beschränkt sein soll.

Es zeigen:
Fig. 1 eine schematische Darstellung einer Schweißvorrichtung mit einem Schweißroboter;
Fig. 2A eine schematische Darstellung eines Schweißbrenners gemäß einer ersten Ausführungsform der Erfindung im Querschnitt;
Fig. 2B eine schematische Darstellung eines Schweißbrenners gemäß einer zweiten Ausführungsform der Erfindung im Querschnitt;
Fig. 2C eine schematische Darstellung eines Schweißbrenners mit einer Hilfsspannungsquelle;
Fig. 3A-3C jeweils vereinfachte Darstellung zur Veranschaulichung von Spannungsabfällen an einem Spannungsteiler;
Fig. 4 verschiedene schematische Signalverläufe der erfindungsgemäßen Schweißvorrichtung;
Fig. 5A und Fig. 5B den Verlauf einer Schweißspannung, den Verlauf von Strömen durch Kondensatoren der Schweißvorrichtung, sowie den Verlauf eines Detektionssignals;
Fig. 6 ein vereinfachtes Blockschaltbild; und
Fig. 7A und Fig. 7B den Verlauf einer Schweißspannung, den Verlauf einer Messspannung sowie den Verlauf eines Detektionssignals.

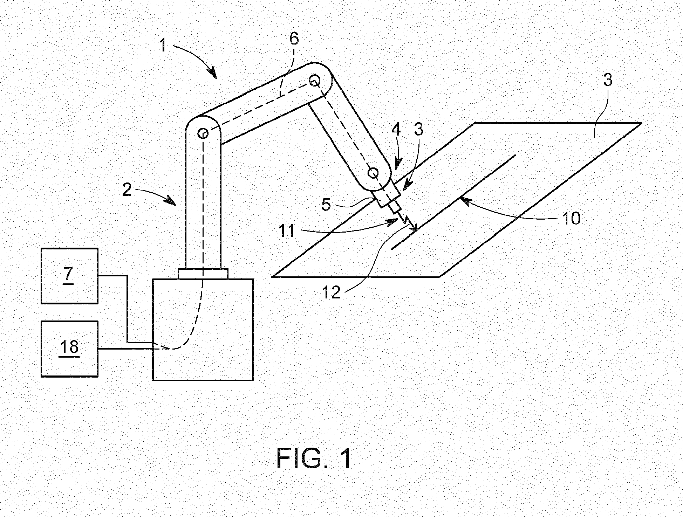

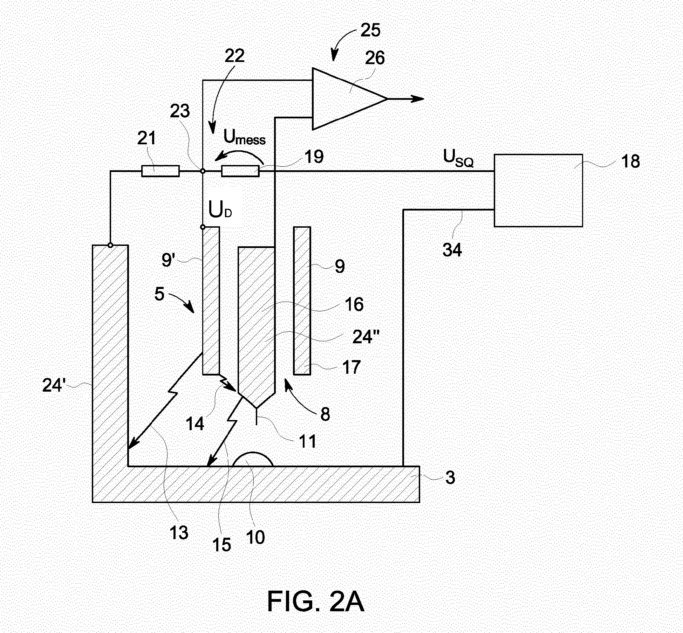

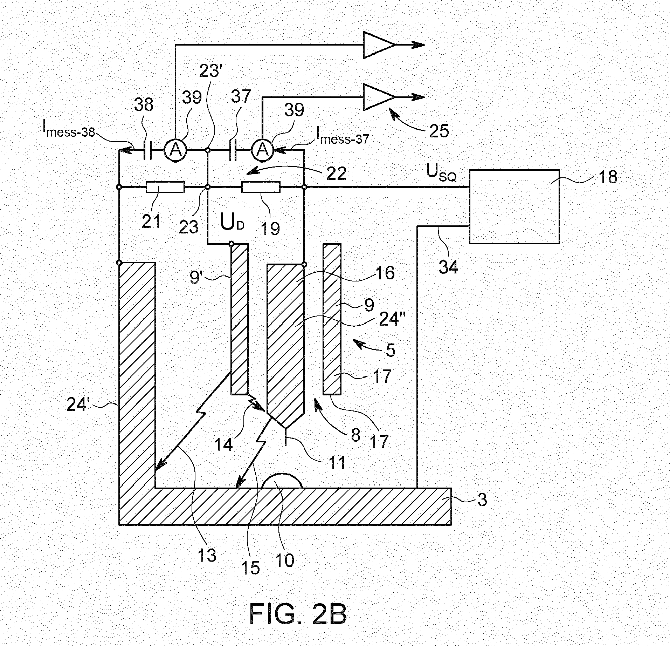

Fig. 1 zeigt eine Schweißvorrichtung 1 mit einem Schweißroboter 2, die zur Durchführung eines Schutzgasschweißprozesses an einem Werkstück 3 ausgebildet ist. An einem Flansch 4 des Schweißroboters 2 ist ein Schweißbrenner 5 befestigt, der über ein Schlauchpaket 6 mit einer Schweißstromquelle 18 und einer Gasversorgung 7 verbunden ist. Die Gasversorgung 7 versorgt den Schweißbrenner 5 mit einem Schutzgas, beispielsweise Helium, Argon, CO₂ oder Gemische davon, das an einer unteren Öffnung 8 einer Gasdüse 9 (siehe Fig. 2A und Fig. 2B) des Schweißbrenners 5 austritt und den Lichtbogen 12 und die Schweißnaht 10 am Werkstück 3 vor dem Sauerstoff der Umgebungsluft und chemischen Reaktionen schützt. Ein Schweißdraht 11 (siehe Fig. 2A und Fig. 2B) wird ebenfalls durch die Gasdüse 9 geführt, zu dessen Aufschmelzung ein Lichtbogen 12 zwischen dem Ende des Schweißdrahts 11 und dem Werkstück 3 erzeugt wird. Der Schweißroboter 2 fährt entlang einer vorgegebenen Trajektorie, während der Schweißbrenner 5 den Schweißprozess durchführt.

Während des Schweißprozesses kann es zu einem unerwünschten Kontakt 13 zwischen dem Schweißbrenner 5 und dem Werkstück 3 kommen, wie in Fig. 2A und Fig. 2B dargestellt. Es kann auch passieren, dass metallische Spritzer (nicht gezeigt) des abschmelzenden Schweißdrahtes 11 einen elektrischen Kontakt 14 zwischen der Gasdüse 9 und einem innerhalb der Gasdüse 9 angeordneten, spannungsführenden Kontaktrohr 16 erzeugen. Die beschriebenen Kontakte 13 und 14 können nachteilige Auswirkungen auf den Schweißprozess haben, da bei einer Berührung zwischen Schweißbrenner 5 und Werkstück 3 Schäden am Schweißbrenner 5 oder am Werkstück 3 auftreten können oder bei einem elektrischen Kurzschluss zwischen Kontaktrohr 16 und Gasdüse 9 der Lichtbogen 12 abgelenkt werden kann. Die erwähnten metallischen Spritzer können zudem auch den Austritt des Schutzgases auf nachteilige Weise beeinflussen, sodass es zu einer Verschlechterung des Gasschutzes für die Schweißnaht 10 und den Lichtbogen 12 kommen kann. Bei gleichzeitigem Auftreten mehrerer Kontakte 13, 14 können sich die einzelnen Nachteile der Kontakte 13, 14 zudem auch verstärken. Beispielsweise kann bei einem gleichzeitigen Auftreten eines Kontakts 13 und eines Kontakts 14 ein Lichtbogen zwischen der Gasdüse 9 und dem Werkstück 3 entstehen. Kontakte 13, 14 sollten daher rasch erkannt werden und entsprechende Gegenmaßnahmen getroffen werden. Neben den beiden Kontakten 13 und 14 kann auch ein Kontakt 15 zwischen dem Kontaktrohr 16 und dem Werkstück 3 auftreten, der während des Schweißprozesses überwacht wird. Der Kontakt 15 kann während des Schweißprozesses, insbesondere eines kurzschlussbehafteten Schweißprozesses, bewusst stattfinden und somit keinen Fehler darstellen.

Erfindungsgemäß ist zur Erkennung der Kontakte 13 und 14 vorgesehen, dass an ein außenliegendes Element 17 des Schweißbrenners 5, vorzugsweise an die Gasdüse 9 des Schweißbrenners 5, insbesondere an eine Außenwand 9' der Gasdüse 9, eine elektrische Spannung U_{D} angelegt und mit Hilfe dieser angelegten Spannung U_{D} bzw. auf Basis der Änderung der Spannung U_{D} oder einer damit in Beziehung stehenden elektrischen Größe allfällig auftretende Kontakte 13 und 14 während des Schweißprozesses detektiert werden. Dies ist in den Figuren Fig. 2A und Fig. 2B an Hand zweier beispielhafter Ausführungsformen der Erfindung veranschaulicht.

In Fig. 2A ist eine schematische Darstellung eines Schweißbrenners 5 im Querschnitt gezeigt. Der Schweißbrenner 5 weist ein Kontaktrohr 16 auf, welches einen Schweißdraht 11 mit einer von einer Schweißstromquelle 18 zur Verfügung gestellten Schweißspannung U_{SQ} beaufschlagt. Das Kontaktrohr 16 ist von der Gasdüse 9 umgeben. Die Gasdüse 9 bildet ein außenliegendes Element 17 des Schweißbrenners 5 und ist über zumindest einen ersten Widerstand 19 mit der Schweißstromquelle 18 elektrisch verbunden, sodass auf der Gasdüse 9 eine Spannung U_{D} anliegt. Die Spannung U_{D} ist also ein Teil der Spannung U_{SQ}. Es können auch mehrere erste Widerstände 19 vorgesehen sein, die insbesondere in Serie oder parallel geschaltet sein können. Zum Zwecke der besseren Übersicht ist im Folgenden aber nur ein erster Widerstand 19 dargestellt.

Die Gasdüse 9 ist des Weiteren über einen zweiten Widerstand 21 mit dem Potential des Werkstücks 3 verbunden, welches üblicherweise mit dem Minus-Pol (Masse 34) der Schweißvorrichtung 1 verbunden ist. Der zweite Widerstand 21 ist somit einerseits mit dem Gasdüsenpotential und andererseits mit der elektrischen Masse 34 verbunden. Es können auch mehrere zweite Widerstände 21 vorgesehen sein, die insbesondere in Serie oder parallel geschaltet sein können. Der Übersicht halber wird im Folgenden aber nur ein zweiter Widerstand 21 gezeigt. Mit den Widerständen 19, 21 wird ein Spannungsteiler 22 gebildet, der einen Abgriffspunkt 23 aufweist, mit dem die Gasdüse 9 elektrisch verbunden ist. Das Potential des Abgriffspunktes 23 liegt demnach an der Gasdüse 9 an, sodass an der Gasdüse 9 die Spannung U_{D} anliegt.

Um allfällig auftretende elektrische Kontakte 13, 14 der Gasdüse 9 mit weiteren Elementen 24', 24", beispielsweise dem Werkstück 3 oder dem Kontaktrohr 16, festzustellen, ist eine Detektionseinheit 25 vorgesehen. Die Detektionseinheit 25 ist dazu eingerichtet, einen allfällig auftretenden elektrischen Kontakt 13, 14 festzustellen, indem diese eine Spannung Uₘₑₛₛ am zumindest einen ersten Widerstand 19 und/oder zumindest einen zweiten Widerstand 21 misst bzw. überwacht. Alternativ könnte die Detektionseinheit 25 zur Detektion von Kontakten 13, 14 an Stelle der Spannung auch einen Strom durch den zumindest einen ersten Widerstand 19 bzw. den zumindest einen zweiten Widerstand 21 messen. In Fig. 2A wird nur die Spannung Uₘₑₛₛ am zumindest einen ersten Widerstand 19 gemessen. Zum Messen der Spannung weist die Detektionseinheit 25 zumindest eine Spannungsmesseinrichtung 26 auf. Das Verfahren zur Detektion und Unterscheidung der elektrischen Kontakte 13, 14 wird weiter unten näher beschrieben. Zunächst wird eine weitere Ausführungsform der Erfindung beschrieben.

Fig. 2B zeigt eine alternative Ausführungsform der Erfindung. In Fig. 2B ist parallel zu dem zumindest einen ersten Widerstand 19 zumindest ein erster Kondensator 37 geschaltet. Des Weiteren ist parallel dem zumindest einen zweiten Widerstand 21 zumindest ein zweiter Kondensator 38 geschaltet. Die Detektionseinheit 25 weist in der gezeigten Ausführungsform zwei Strommesseinrichtungen bzw. Strommesssensoren 39 auf, welche getrennt bzw. unabhängig die elektrischen Ströme durch den ersten Kondensator 37 und den zweiten Kondensator 38 messen. Der Zweig bestehend aus den Strommesssensoren 39 und den Kondensatoren 37, 38 - wobei je ein Strommesssensor 39 und ein Kondensator 37, 38 in Serie geschaltet sind - bildet einen weiteren Spannungsteiler, dessen Abgriffspunkt 23' mit dem Abgriffspunkt 23 des Spannungsteilers 22 verbunden ist. Durch die Überwachung der jeweiligen durch die Kondensatoren 38 fließenden Ströme bzw. deren Änderung können allfällige elektrische Kontakte 13, 14 detektiert und voneinander unterschieden werden, wie weiter unten näher erläutert wird.

Um die elektrischen Kontakte 13, 14 zu detektieren und unterscheiden zu können, wird bei der Ausführungsform gemäß Fig. 2A die Spannung U_{D} bzw. die Spannung an einem der Widerstände 19, 21 gemessen bzw. überwacht und mit einem Soll-Wert verglichen. Selbstverständlich könnte auch (nur) der Strom durch den ersten 19 und/oder zweiten Widerstand 21 gemessen bzw. überwacht und mit einem Soll-Wert verglichen werden. Bei der Ausführungsform gemäß Fig. 2B werden die Ströme durch den ersten 37 und den zweiten Kondensator 38 erfasst und mit einem Sollwert verglichen. Im fehlerfreien Normalzustand, in welchem kein elektrischer Kontakt 13, 14 vorliegt, teilt sich die Schweißspannung U_{SQ} gemäß den Widerstandswerten der Widerstände 19, 21 auf. An der Gasdüse 9 liegt die Spannung U_{D} an, die bei der gezeigten Ausführungsform kleiner als U_{SQ} ist. Wenn die Widerstände 19, 21 im Wesentlichen gleich große Widerstandswerte aufweisen, beträgt U_{D} im Wesentlichen 50 % der Schweißspannung U_{SQ}. Tritt ein elektrischer Kontakt 13, 14 auf, kommt es zu Spannungsverschiebungen innerhalb des Spannungsteilers 22. Diese Spannungsverschiebungen bzw. die damit einhergehende Änderung des elektrischen Stromes können mit Hilfe der Detektionseinheit 25 festgestellt und dadurch auf einen elektrischen Kontakt 13, 14 während des Schweißprozesses geschlossen werden.

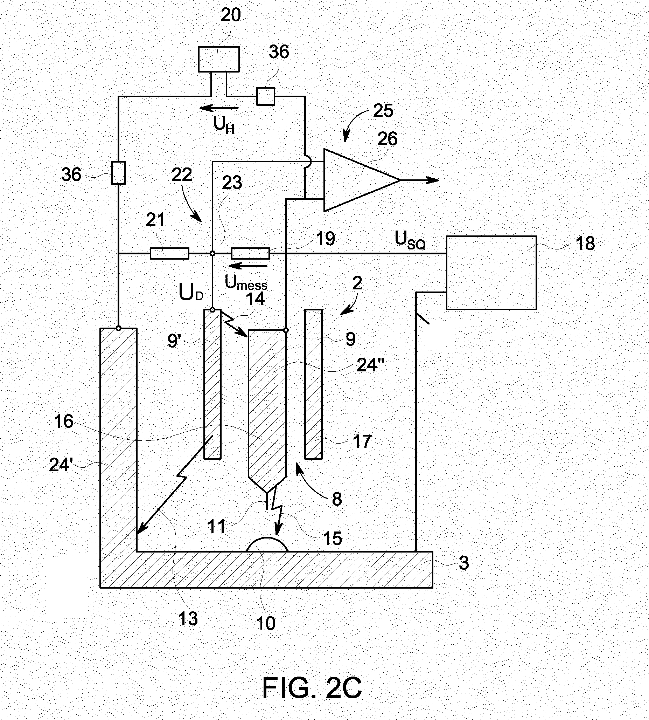

In Fig. 2C ist ein Schweißbrenner mit einer Hilfsspannungsquelle 20 dargestellt. Die Hilfsspannungsquelle 20 kann vorzugsweise eine höhere Spannung liefern als die Schweißstromquelle 18. Die Hilfsspannungsquelle 20 ist vorzugsweise von der Schweißstromquelle 18 getrennt, insbesondere galvanisch getrennt. Die Trennung von der Schweißstromquelle 18 kann über eine Entkoppelungsschaltung 36 erfolgen. Die Entkoppelungsschaltung 36 kann zu diesem Zweck zumindest einen elektrischen Schalter, insbesondere ein Relais, enthalten. Eine Trennung ist jedoch nicht zwingend. Die Hilfsspannungsquelle 20 wird vorzugsweise zur Detektion der elektrischen Kontakte 13, 14, 15 vor oder nach dem Schweißprozess ohne Zuhilfenahme der Schweißspannung U_{SQ} verwendet. Der Kontakt 15 findet zwischen dem Kontaktrohr 16 und dem Werkstück 3 statt. In Fig. 2C sind die Schweißstromquelle 18 und die Hilfsspannungsquelle 20 elektrisch miteinander über die Entkoppelungsschaltung 36 hochohmig (Werte größer als 10 kΩ) verbunden. Die Entkoppelungsschaltungen 36 dienen auch als Strombegrenzung für die Hilfsspannungsquelle 20.

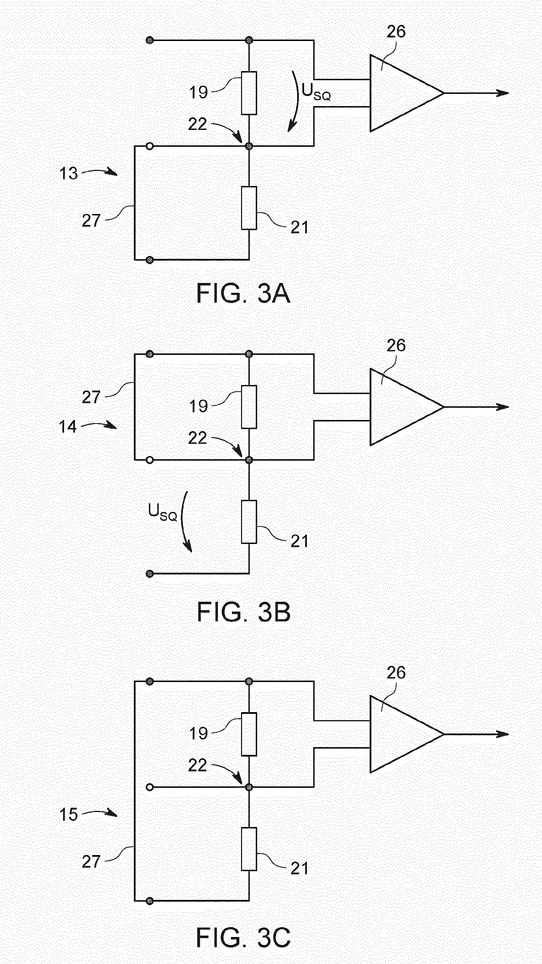

Im Folgenden werden die Auswirkungen und die Unterschiede zwischen den elektrischen Kontakten 13, 14, 15 an Hand der Figuren Fig. 3A-C näher erläutert. In den Figuren Fig. 3A-C ist jeweils der Spannungsteiler 22 mit einer Spannungsmesseinrichtung 26 der Detektionseinheit 25 gezeigt. Die elektrischen Kontakte 13, 14, 15 sind jeweils mit einer Verbindung 27 dargestellt.

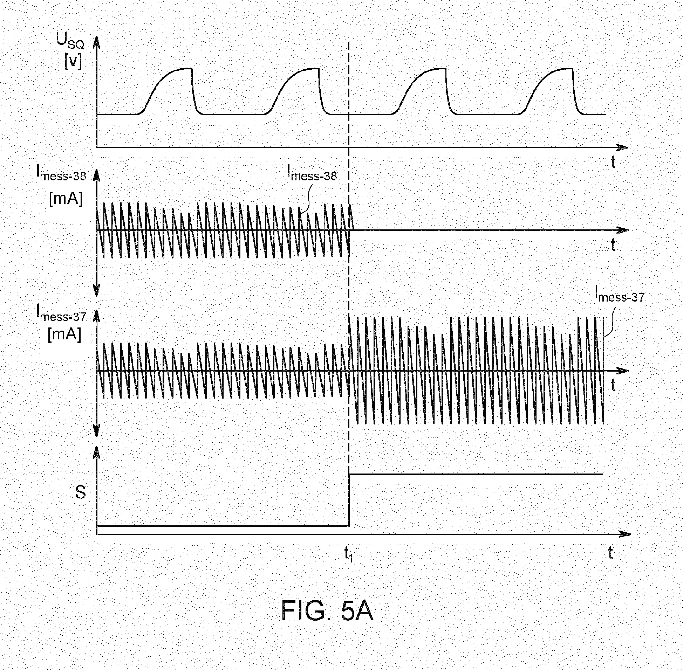

Ein erster elektrischer Kontakt 13 kann durch Berührung der Gasdüse 9 mit einem ersten weiteren Element 24', beispielsweise dem Werkstück 3, auftreten. Durch die Berührung der Gasdüse 9 mit dem Werkstück 3 wird der zweite Widerstand 21 kurzgeschlossen und die gesamte Schweißspannung U_{SQ} fällt am ersten Widerstand 19 ab (Fig. 3A). In Bezug auf die Ausführungsform nach Fig. 2B bedeutet das, dass durch den zweiten Kondensator 38 parallel zum zweiten Widerstand 21 aufgrund des Kurzschlusses kein oder nur ein geringer Strom fließt. Durch den ersten Kondensator 37 parallel zum ersten Widerstand 19 ist hingegen ein Stromfluss feststellbar. Dieser Fall ist in Fig. 5A näher dargestellt. In einem solchen Fall kann die Schweißbahn noch während des Schweißprozesses geändert werden, um Schäden am Werkstück 3 oder am Schweißbrenner 5 zu vermeiden. Der Schweißprozess muss dabei nicht zwingend unterbrochen werden.

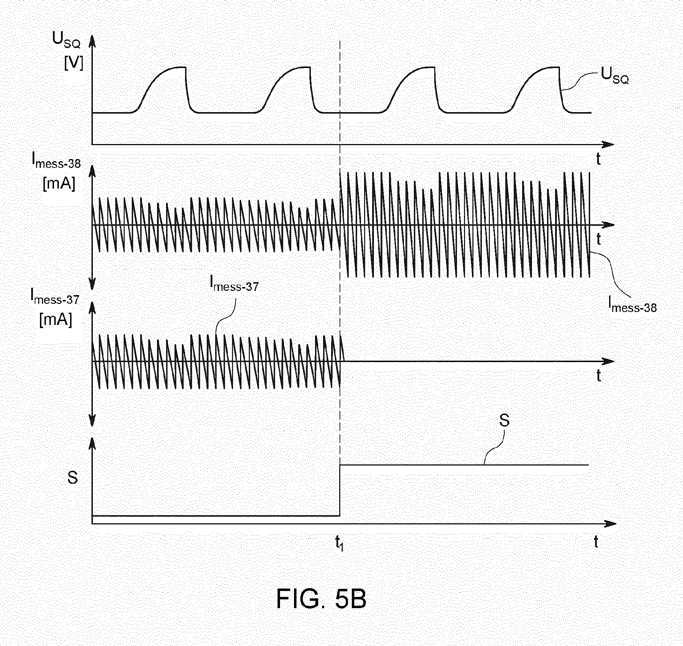

Ein zweiter elektrischer Kontakt 14 kann durch metallische Schweißspritzer des abschmelzenden Schweißdrahtes 11 zwischen der Gasdüse 9 und einem zweiten weiteren Element 24", beispielsweise dem Kontaktrohr 16, auftreten. Durch den elektrischen Kontakt 14 zwischen Kontaktrohr 16 und der Gasdüse 9 wird der erste Widerstand 19 kurzgeschlossen und die gesamte Schweißspannung U_{SQ} fällt am zweiten Widerstand 21 ab (Fig. 3B). In Bezug auf die Ausführungsform nach Fig. 2B bedeutet das, dass durch den ersten Kondensator 37 parallel zum ersten Widerstand aufgrund des Kurzschlusses kein oder nur ein geringer Strom fließt. Durch den zweiten Kondensator 38 parallel zum zweiten Widerstand 21 ist hingegen ein Stromfluss feststellbar. Dieser Fall ist in Fig. 5B näher dargestellt. Bei einem Kontakt dieser Art kann die Gasdüse 9 zerstört werden. Im Falle eines elektrischen Kontakts 14 kann eine Reinigungsempfehlung ausgegeben werden, um den Schweißbrenner 5 auszutauschen oder zu reinigen, oder der Schweißprozess unterbrochen werden.

Ein dritter elektrischer Kontakt 15, dessen Auftreten während des Schweißprozesses allerdings keinen Fehler darstellt, entsteht durch eine Berührung zwischen Kontaktrohr 16 oder Schweißdraht 11 und Werkstück 3. Durch den elektrischen Kontakt 14 zwischen Kontaktrohr 16 oder Schweißdraht 11 und Werkstück 3 werden die Widerstände 19 und 21 kurzgeschlossen. Dieser Fall kann insbesondere vor oder nach einem Schweißprozess durch zusätzliche Messung der Schweißspannung U_{SQ} oder einer Hilfsspannung U_{H} festgestellt und von den anderen Fällen unterschieden werden, da in einem solchen Fall auch die Schweißspannung U_{SQ} bzw. die Hilfsspannung U_{H} einbricht. In Bezug auf die Ausführungsform nach Fig. 2B bedeutet das, dass durch die Kondensatoren 37, 38 parallel zum ersten 19 und zum zweiten Widerstand 21 aufgrund des Kurzschlusses kein Strom fließt.

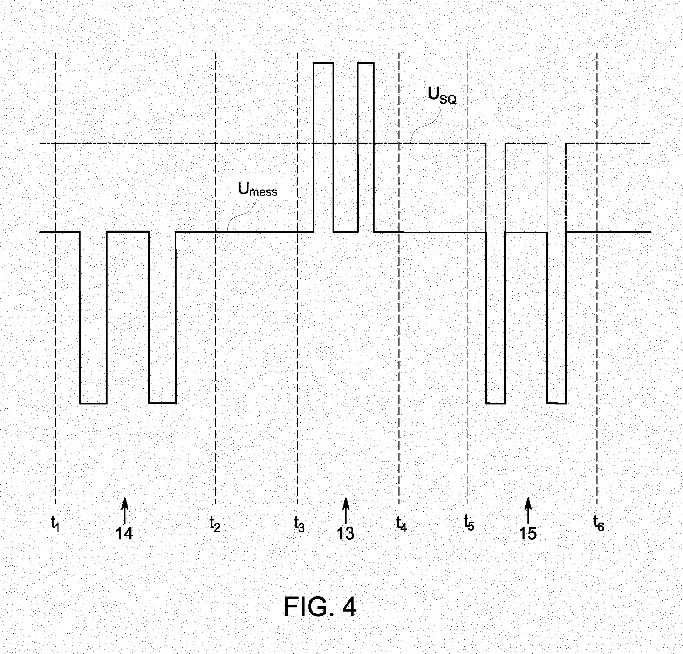

Fig. 4 zeigt qualitativ einen Verlauf einer Messspannung Uₘₑₛₛ (in Volt) über den ersten Widerstand 19 und einen Verlauf einer Schweißspannung U_{SQ}, wobei zur besseren Übersicht kein Schweißprozess durchgeführt wird, weshalb die Schweißspannung U_{SQ} (bis auf den Zeitraum zwischen t₅ und t₆) im Wesentlichen konstant bleibt. Im Laufe der Zeit treten unterschiedliche elektrische Kontakte 13, 14, 15 auf.

Im Zeitraum zwischen den Zeitpunkten t₁ und t₂ treten zwei elektrische Kontakte 14 zwischen der Gasdüse 9 und dem Kontaktrohr 16 auf. Es ist erkennbar, dass die Schweißspannung U_{SQ} konstant bleibt, aber die Spannung Uₘₑₛₛ auf im Wesentlichen 0 V abfällt. Im Zeitraum zwischen den Zeitpunkten t₂ und t₃ treten keine elektrischen Kontakte 13, 14, 15 auf. Uₘₑₛₛ entspricht einem Soll-Wert.

Im Zeitraum zwischen den Zeitpunkten t₃ und t₄ treten zwei elektrische Kontakte 13 zwischen der Gasdüse 9 und dem Werkstück 3 auf. Es ist erkennbar, dass die Schweißspannung U_{SQ} konstant bleibt, aber die Spannung Uₘₑₛₛ ansteigt, da der zumindest eine zweite Widerstand 21 kurzgeschlossen ist.

Im Zeitraum zwischen den Zeitpunkten t₄ und t₅ treten keine elektrischen Kontakte 13, 14, 15 auf. Uₘₑₛₛ entspricht einem Soll-Wert.

Im Zeitraum zwischen den Zeitpunkten t₅ und t₆ treten zwei elektrische Kontakte 15 zwischen dem Kontaktrohr 16 und dem Werkstück 3 auf. Es ist erkennbar, dass sowohl die Schweißspannung U_{SQ}, als auch die Spannung Uₘₑₛₛ auf im Wesentlichen 0 V abfallen. Der Kontakt 15 stellt während des Schweißprozesses keinen Fehler dar.

Fig. 5A zeigt Zeitverläufe einer Schweißspannung U_{SQ} und von Strömen Iₘₑₛₛ₋₃₇, Iₘₑₛₛ₋₃₈ durch den ersten Kondensator 37 und den zweiten Kondensator 38 (siehe Fig. 2B) während eines Schweißprozesses. Bei den Strömen handelt es sich um Wechsel- bzw. Rippelströme, welche durch das getaktete Leistungsteil der Schweißstromquelle 18 entstehen. Zum Zeitpunkt t₁ tritt ein Kontakt 13 auf, sodass der zweite Widerstand 21 und der zweite Kondensator 38 kurzgeschlossen werden. Folglich ist kein oder nur ein geringer Strom durch den zweiten Kondensator 38 feststellbar. Der Strom durch den ersten Kondensator 37 erhöht sich hingegen. Durch den Anstieg bzw. die Verringerung der Ströme durch die Kondensatoren 37, 38 kann der Kontakt 13 bei Vergleich mit einem Soll-Wert erkannt werden. Zum Zeitpunkt des Auftretens wird ein Detektionssignal S ausgegeben.

Fig. 5B zeigt ebenfalls Zeitverläufe der Schweißspannung U_{SQ} und von Strömen Iₘₑₛₛ₋₃₇, Iₘₑₛₛ₋₃₈ durch den ersten 37 und den zweiten Kondensator 38 während eines Schweißprozesses. Zum Zeitpunkt t₁ tritt jedoch ein Kontakt 14 auf, sodass der erste Widerstand 19 und der erste Kondensator 37 kurzgeschlossen werden. Folglich ist kein oder nur ein geringer Strom durch den ersten Kondensator 37 feststellbar. Der Strom durch den zweiten Kondensator 38 erhöht sich hingegen. Durch den Anstieg bzw. die Verringerung der Ströme durch die Kondensatoren 37, 38 kann der Kontakt 14 bei Vergleich mit einem Soll-Wert erkannt werden. Zum Zeitpunkt des Auftretens wird ein Detektionssignal S ausgegeben.

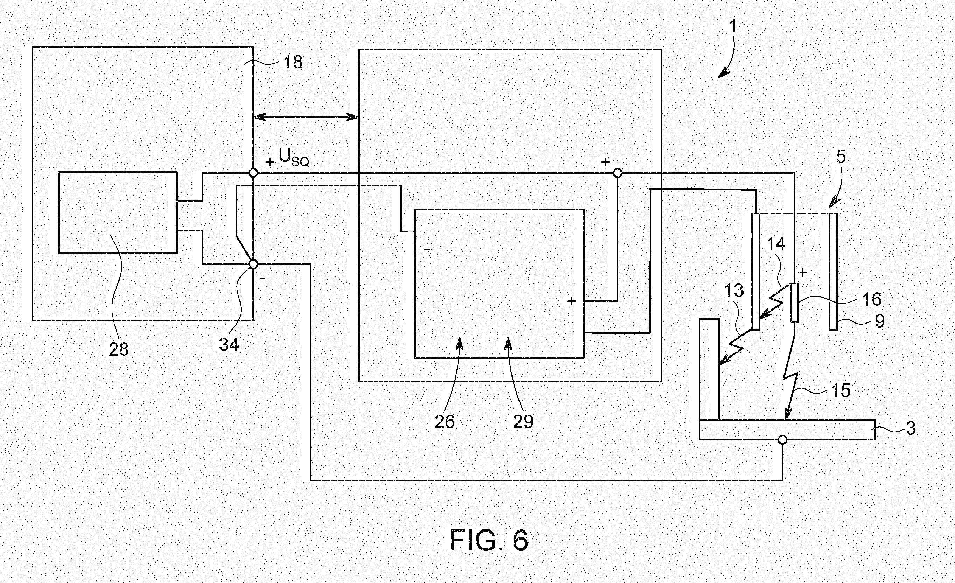

Fig. 6 zeigt in einem Blockschaltbild schematisch eine beispielhafte Umsetzung der Schweißvorrichtung 1. Es werden nur die wichtigsten Komponenten dargestellt. Hierbei wird einerseits die Schweißspannung U_{SQ} der Schweißstromquelle 18 mit einer weiteren Spannungsmesseinrichtung 28 gemessen und andererseits die Spannung Uₘₑₛₛ an einem der Widerstände 19, 21 (nicht gezeigt) gemessen. Die Widerstände 19, 21 sind gemeinsam mit einer Spannungsmesseinrichtung 26 in einer Schaltung 29 verwirklicht.

Die Schweißspannung U_{SQ} der Schweißstromquelle 18 muss nicht konstant sein, sondern kann während eines Schweißprozesses variieren. Insbesondere in den einzelnen Phasen des Schweißprozesses, beispielsweise in einer Lichtbogenphase, in einer Grundstromphase und in einer Pulsphase, kann die Schweißspannung U_{SQ} unterschiedlich sein. Folglich würde auch der Soll-Wert für die Messspannung Uₘₑₛₛ in den einzelnen Phasen des Schweißprozesses variieren, was die Auswertung und Detektion von elektrischen Kontakten 13, 14 erschweren würde. Um dem zu begegnen, kann ein Skalierungsfaktor P, der sich aus der Beschaltung, insbesondere aus dem Spannungsteiler 22 und der verwendeten Messschaltung ergibt, ermittelt werden. Auf Basis des Skalierungsfaktors P und einer aktuellen Schweißspannung U_{SQ} kann zu jedem Zeitpunkt der Soll-Wert für die Messspannung Uₘₑₛₛ ermittelt werden, sodass die elektrischen Kontakte 13, 14 unabhängig von der Höhe der angelegten Schweißspannung U_{SQ} ermittelt werden können. Der Soll-Wert entspricht jener Spannung, die vorliegen sollte, wenn kein Kontakt 13, 14 vorliegt. Natürlich kann bei dem verwendeten Verfahren auch eine Strommessung an Stelle einer Spannungsmessung durchgeführt werden.

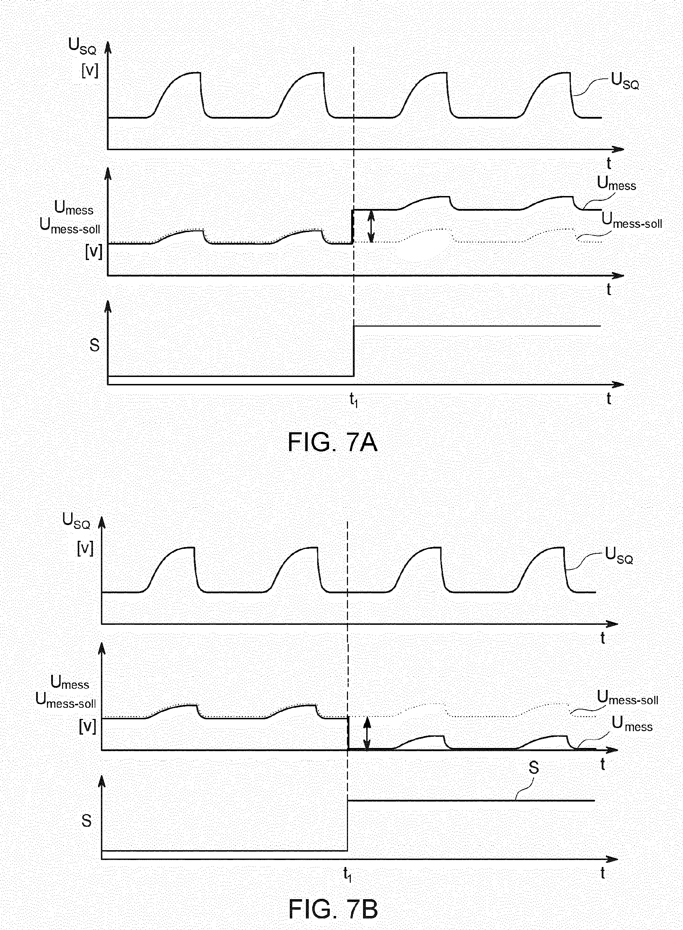

In Fig. 7A und Fig. 7B sind der Verlauf der Schweißspannung U_{SQ} und der Verlauf der Messspannung Uₘₑₛₛ über den ersten Widerstand 19 dargestellt. In Fig. 7A tritt zum Zeitpunkt t₁ ein Kontakt 13 auf. In Fig. 7B tritt zum Zeitpunkt t₁ ein Kontakt 14 auf. Die gestrichelte Linie stellt den Verlauf des mittels des Skalierungsfaktors P bestimmten Soll-Werts Uₘₑₛₛ₋ₛₒₗₗ für die Messspannung Uₘₑₛₛ dar. Vor dem Eintritt eines Kontaktes 13, 14 entspricht die Messspannung Uₘₑₛₛ im Wesentlichen dem Soll-Wert Umess-soii. Nach Eintritt eines Kontaktes 13, 14 zum Zeitpunkt t₁ weicht die Messspannung Uₘₑₛₛ vom Verlauf des Soll-Werts Uₘₑₛₛ₋ₛₒₗₗ ab. Auf Basis der Art der Abweichung U_{diff} der Messspannung Uₘₑₛₛ von dem Soll-Wert Uₘₑₛₛ₋ₛₒₗₗ kann die Art des Kontaktes 13, 14 festgestellt werden. Zum Zeitpunkt des Auftretens wird ein Detektionssignal S ausgegeben. Die Auswertung findet vorzugsweise in der Lichtbogenphase eines Schweißprozesses statt. Es ist erkennbar, dass der Verlauf des Soll-Wertes Umess-soii dem Verlauf der Schweißspannung U_{SQ} qualitativ entspricht. Dies ist darauf zurückzuführen, dass Uₘₑₛₛ₋ₛₒₗₗ laufend mit Hilfe des Skalierungsfaktors P aus der Schweißspannung U_{SQ} ermittelt wird. Durch die Skalierung ist eine Detektion von Kontakten 13, 14 unabhängig von der Höhe der Schweißspannung U_{SQ} möglich.

## Patentansprüche

1. Verfahren, bei dem mit einem Schweißbrenner (5), welcher vorzugsweise an einem Roboter (2) angeordnet ist, ein Schweißprozess an einem Werkstück (3) durchführt wird, **dadurch gekennzeichnet, dass** während des Schweißprozesses zumindest zeitweise eine elektrische Spannung (U_{D}) an ein außenliegendes Element (17) des Schweißbrenners (5), insbesondere an eine Außenwand (9) einer Gasdüse (9), angelegt wird und mit der angelegten elektrischen Spannung (U_{D}) ein allenfalls auftretender elektrischer Kontakt (13, 14) zwischen dem außenliegenden Element (17) und einem weiteren Element (24', 24"), insbesondere dem Werkstück (3) oder einem Kontaktrohr (16), detektiert wird.

2. Verfahren nach Anspruch 1, **dadurch gekennzeichnet, dass** bei einem detektierten elektrischen Kontakt (13, 14), insbesondere einer Berührung des außenliegenden Elements (17) mit dem Werkstück (3), ein Warnsignal ausgegeben, der Schweißprozess unterbrochen, eine Schweißbahn korrigiert und/oder das Werkstück (3) neu platziert wird.

3. Verfahren nach Anspruch 1 oder 2, **dadurch gekennzeichnet, dass** das außenliegende Element (17) des Schweißbrenners (5) elektrisch mit einer Schweißstromquelle (18) zur Bereitstellung einer Schweißspannung (U_{SQ}) verbunden ist.

4. Verfahren nach Anspruch 3, **dadurch gekennzeichnet, dass** die Schweißstromquelle (18) über zumindest einen ersten Widerstand (19) mit dem außenliegenden Element (17) des Schweißbrenners (5) elektrisch verbunden ist.

5. Verfahren nach einem der Ansprüche 1 bis 4, **dadurch gekennzeichnet, dass** das außenliegende Element (17) des Schweißbrenners (5) über zumindest einen zweiten Widerstand (21) mit dem elektrischen Potential des Werkstücks (3) verbunden ist.

6. Verfahren nach Anspruch 5 in Rückbeziehung auf Anspruch 4, **dadurch gekennzeichnet, dass** ein allenfalls auftretender elektrischer Kontakt (13, 14) des außenliegenden Elements (17) mit dem weiteren Element (24', 24") auf Basis einer Änderung einer gemessenen Spannung (Uₘₑₛₛ), welche über den zumindest einen ersten (19) und/oder den zumindest einen zweiten Widerstand (21) abfällt, und/oder eines gemessenen Stromes, der durch den zumindest einen ersten (19) und/oder zumindest einen zweiten Widerstand (21) fließt, detektiert wird.

7. Verfahren nach Anspruch 6, **dadurch gekennzeichnet, dass** auf Basis der Änderung der gemessenen Spannung (Uₘₑₛₛ) und/oder des gemessenen Stromes zumindest zwei unterschiedliche Arten von möglichen elektrischen Kontakten (13, 14) unterschieden werden, nämlich zumindest ein elektrischer Kontakt (13) zwischen dem außenliegenden Element (17) und einem ersten weiteren Element (24'), insbesondere dem Werkstück (3), und ein elektrischer Kontakt (14) zwischen dem außenliegenden Element (17) und einem zweiten weiteren Element (24"), insbesondere einem Kontaktrohr (16) des Schweißbrenners (5).

8. Verfahren nach Anspruch 5 in Rückbeziehung auf Anspruch 4, **dadurch gekennzeichnet, dass** parallel zu dem zumindest einen ersten Widerstand (19) zumindest ein erster Kondensator (37) und parallel zu dem zumindest einen zweiten Widerstand (21) zumindest ein zweiter Kondensator (38) angeordnet ist.

9. Verfahren nach Anspruch 8, **dadurch gekennzeichnet, dass** ein allenfalls auftretender elektrischer Kontakt (13, 14) des außenliegenden Elements (17) mit dem weiteren Element (24', 24") auf Basis einer Änderung eines gemessenen Stromes, welcher durch den zumindest einen ersten (37) und/oder den zumindest einen zweiten Kondensator (38) fließt, detektiert wird.

10. Verfahren nach einem der Ansprüche 1 bis 8, **dadurch gekennzeichnet, dass** eine Änderung der Schweißspannung (U_{SQ}) der Schweißstromquelle (18) bei der Detektion eines allenfalls auftretenden elektrischen Kontakts (13, 14) herangezogen wird.

11. Schweißvorrichtung (1), insbesondere Schutzgasschweißvorrichtung, zur Durchführung eines Schweißprozesses an einem Werkstück (3) mit einem Schweißbrenner (5), der vorzugsweise an einem Roboter (2) angeordnet ist, **dadurch gekennzeichnet, dass** eine elektrische Spannung (U_{D}) an einem außenliegenden Element (17) des Schweißbrenners (5), insbesondere an einer Außenwand (9') einer Gasdüse (9), anliegt und eine Detektionseinheit (25) vorgesehen und dazu eingerichtet ist, während des Schweißprozesses einen allfällig auftretenden elektrischen Kontakt (13, 14) zwischen dem außenliegenden Element (17) und einem weiteren Element (24', 24"), insbesondere dem Werkstück (3) oder einem Kontaktrohr (16) des Schweißbrenners (5), zu detektieren.

12. Schweißvorrichtung (1) nach Anspruch 11, **dadurch gekennzeichnet, dass** zum Anlegen der elektrischen Spannung (U_{D}) eine Schweißstromquelle (18) zur Bereitstellung einer Schweißspannung (U_{SQ}) mit dem außenliegenden Element (17) des Schweißbrenners (5) verbunden ist.

13. Schweißvorrichtung (1) nach Anspruch 11 oder 12, **dadurch gekennzeichnet, dass** die Schweißstromquelle (18) über zumindest einen ersten Widerstand (19) mit dem außenliegenden Element (17) des Schweißbrenners (2) verbunden ist.

14. Schweißvorrichtung (1) nach einem der Ansprüche 11 bis 13, **dadurch gekennzeichnet, dass** das außenliegende Element (17) des Schweißbrenners (5) über zumindest einen zweiten Widerstand (21) mit dem Potential des Werkstücks (3) verbunden ist.

15. Schweißvorrichtung (1) nach Anspruch 14 in Rückbeziehung auf Anspruch 13, **dadurch gekennzeichnet, dass** parallel zu dem zumindest einen ersten Widerstand (19) zumindest ein erster Kondensator (37) und parallel zu dem zumindest einen zweiten Widerstand (21) zumindest ein zweiter Kondensator (38) angeordnet ist.
